# EUROPÄISCHE PATENTSCHRIFT

(11) **EP 2 219 006 B1**
(45) Veröffentlichungstag und Bekanntmachung des Hinweises auf die Patenterteilung: **04.01.2017**
(21) Anmeldenummer: 10152510.3
(22) Anmeldetag: 03.02.2010
(51) Int. Cl.: F41H 7/04, B62D 33/063

(54) **Fahrzeug, insbesondere militärisches Fahrzeug**
Vehicle, in particular military vehicle
Véhicule, notamment véhicule militaire

(30) Priorität: 12.02.2009 DE 102009008678
(43) Veröffentlichungstag der Anmeldung: 18.08.2010
(73) Patentinhaber: Krauss-Maffei Wegmann GmbH & Co. KG, 80997 München (DE)
(72) Erfinder: Grünewald, Jens, 34131, Kassel (DE)
(74) Vertreter: Feder Walter Ebert

(56) Entgegenhaltungen:
- EP-A1- 1 845 014
- DE-A1- 4 219 688
- DE-C1- 19 652 678
- DE-U1-202006 011 312

## Beschreibung

Die Erfindung betrifft ein Fahrzeug, insbesondere ein militärisches Fahrzeug, mit einer einen oberen Karosseriekörper und einen unteren Karosseriekörper umfassenden Fahrzeugkarosserie, wobei der obere Karosseriekörper gegenüber dem unteren Karosseriekörper zur Verringerung der Fahrzeughöhe bewegbar ist und wobei der obere Karosseriekörper in Neigungsrichtung einer gegenüber der Horizontalen geneigten Schrägfläche verschiebbar auf dem unteren Karosseriekörper angeordnet ist.

Fahrzeuge weisen in der Regel ein Fahrgestell auf, auf welchem eine Fahrzeugkarosserie angeordnet ist. Insbesondere bei militärischen Fahrzeugen ist es von Vorteil, wenn die äußere Kontur ein bestimmtes Verlademaß nicht überschreitet, damit das Fahrzeug fremdverladbar, beispielsweise bahnverladbar, ist. Hierbei spielt auch die Fahrzeughöhe eine besondere Rolle, die nach Möglichkeit eine Verladehöhe V nicht überschreiten soll. Die Gesamtfahrzeughöhe wird u.a. maßgeblich durch ergonomische Zwangsbedingungen und verschiedene Auslegungskriterien wie Fahrerblickpunkt, Bodensicht und Kopffreiheit mitbestimmt. Eine verringerte Fahrzeughöhe ist allerdings im regulären Betrieb des Fahrzeugs nachteilig, da beispielsweise somit die Kopffreiheit der Besatzung oder der Frachtraum verringert wird. Aus diesem Grund sind Fahrzeuge bekannt, bei denen ein unterer Karosseriekörper, der mit dem Fahrwerk verbunden ist, und ein oberer Karosseriekörper, der auf dem unteren Karosseriekörper angeordnet ist, vorgesehen ist, wobei der obere Karosseriekörper zur Verringerung der Fahrzeughöhe gegenüber dem unteren Karosseriekörper beispielsweise nach hinten verschwenkt werden kann.

In der EP 1 845 014 A1 wird beispielsweise eine Baumaschine beschrieben, bei der die Fahrzeugkabine als Ganzes angehoben und abgesenkt werden kann, um so eine Verringerung der Transporthöhe zu erreichen.

Eine solche Schwenkbewegung ist allerdings aufwändig zu realisieren, da die u.U. hohe Masse eines gepanzerten Fahrzeugaufbaus verschwenkt werden muss, was bei höheren Gewichten zudem nicht mehr manuell bewerkstelligbar ist.

Es ist die Aufgabe der Erfindung, ein Fahrzeug der eingangs genannten Art derart auszugestalten, dass eine Verringerung der Fahrzeuggesamthöhe durch Bewegung des oberen Karosseriekörpers in einfacher Weise ermöglicht wird.

Die Erfindung löst die Aufgabe mit den Merkmalen aus dem kennzeichnenden Teil des Patentanspruchs 1. Vorteilhafte Weiterbildungen sind Bestandteil der abhängigen Ansprüche.

Bei dem erfindungsgemäßen Fahrzeug ist der obere Karosseriekörper in Neigungsrichtung einer gegenüber der horizontalen, geneigten Schrägfläche verschiebbar auf dem unteren Karosseriekörper angeordnet. Durch die Bewegung in Neigungsrichtung entlang der Schrägfläche kann somit der obere Karosseriekörper abgesenkt werden, so dass die Fahrzeughöhe verringert werden kann.

Der Neigungswinkel zwischen der Horizontalen und der Schrägfläche sollte kleiner als 45°, insbesondere kleiner als 30°, vorzugsweise kleiner als 20°, sein, da bei größeren Winkeln das hohe Gewicht des insbesondere gepanzerten, oberen Karosseriekörpers eine Verschiebemöglichkeit beeinträchtigt.

Der obere Karosseriekörper ist als Haube, insbesondere Dachhaube, ausgestaltet. Er kann beispielsweise den oberen Abschluss eines Fahrerraumes oder den oberen Abschluss eines Frachtraumes bilden. Der Fahrzeuginnenraum kann somit sowohl in dem oberen als auch dem unteren Karosseriekörper liegen. Der Fahrzeuginnenraum wird durch die beiden gegeneinander bewegbaren Teile, nämlich den oberen und unteren Karosseriekörper gebildet. Folglich sollte nicht der gesamte Fahrzeuginnenraum, z. B. eine Fahrerkabine, sondern nur der obere Abschluss, z. B. die Dachhaube, verschoben werden.

Bevorzugt ist der obere Karosseriekörper in Fahrzeugfahrtrichtung verschiebbar. Der untere Karosseriekörper kann hierbei somit eine nach vorne hin keilförmig verlaufende Kontur aufweisen, welche die Schrägfläche bildet, wodurch der Vorteil entsteht, dass eine verbesserte Bodensicht gegeben ist, d.h. dass auch der unmittelbar vor dem Fahrzeug liegende Bereich vom Fahrer einsehbar ist.

Bei einer besonders vorteilhaften Ausgestaltung ist der obere Karosseriekörper aus einer Marschposition, welche den regulären Einsatzzustand des Fahrzeugs darstellt, in eine Transportposition bewegbar, welche eingenommen wird, wenn das Fahrzeug durch ein anderes Fahrzeug, beispielsweise einen Zug, transportiert wird, wobei in der Transportposition die Fahrzeughöhe verringert ist. Zur Erhöhung der Sicherheit kann der obere Karosseriekörper in der Marschposition und der Transportposition mittels mindestens einer Zurrvorrichtung zurrbar sein. Das Fahrzeug kann zudem eine Dichtungsvorrichtung aufweisen, die in der Marschposition des oberen Karosseriekörpers den Fahrerraum gegenüber der Außenumgebung, beispielsweise gegen eine ABC-Bedrohung, abdichtet. Die Marschposition kann während des Fahrens eingenommen werden.

Der obere Karosseriekörper kann in der Marschposition den oberen Abschluss eines Fahrerraumes bilden. Falls der untere Karosseriekörper nach vorne hin keilförmig verläuft, wird in diesem Fall der obere Karosseriekörper bevorzugt in Fahrzeugfahrtrichtung verschoben.

Der obere Karosseriekörper kann in der Marschposition auch den oberen Abschluss eines Frachtraumes bilden. Da der Frachtraum im Regelfalle im hinteren Bereich des Fahrzeugs angeordnet ist, kann der obere Karosseriekörper, insbesondere entgegen der Fahrzeugfahrtrichtung, d.h. nach hinten hin, zur Absenkung verschiebbar sein. Bevorzugt sind die Marschposition und die Transportposition durch eine definierte Endlage, welche beispielsweise durch Anschlagmittel erreicht werden kann, festgelegt. Somit kann erreicht werden, dass die Bewegung des unter Umständen schweren oberen Karosseriekörpers einen definierten Endpunkt hat.

Zur Erreichung einer definierten Verschiebebewegung des oberen Karosseriekörpers kann das Fahrzeug eine Führungsvorrichtung aufweisen. Als Führungselemente können auch Linearschienen, Rollenschlitten, Gleitschienen oder Rollen dienen. Hierdurch kann eine definierte einachsige Bewegung unter allen Geländewinkeln erreicht werden. Der obere Karosseriekörper bewegt sich einachsig, wenn er bei der Bewegung im Wesentlichen keine Richtungsänderung erfährt.

Die Bewegung des oberen Karosseriekörpers kann manuell und/oder mit einem elektrischen, hydraulischen oder pneumatischen Antrieb durchführbar sein. Als Antriebe können beispielsweise Ketten, Spindeln, Hubkolben oder Direktantriebe vorgesehen werden.

Bevorzugt ist der obere Karosseriekörper gepanzert, so dass er ein hohes Schutzlevel bietet. Der obere Karosseriekörper kann ferner eine Tragstruktur beinhalten, die insbesondere mindestens ein Fenster, eine Waffe, eine sensorische Einrichtung und/oder eine optische Einrichtung trägt. Falls die Tragstruktur eine Waffe oder Waffenstation (vgl. beispielsweise DE 10 2004 063 882 B4) mit einer Lafette trägt, besteht der Vorteil, dass die Waffe oder ggf. eine Unterlafette zur Verringerung der Fahrzeughöhe nicht demontiert oder in aufwändiger Weise verschwenkt werden muss, sondern dass diese mit dem oberen Karosseriekörper abgesenkt werden kann. Gleiches gilt bei einem Vorhandensein einer sensorischen und/oder optischen Einrichtung.

Das Fahrzeug kann derart ausgestaltet sein, dass auch in der Transportposition noch ein Notrangierbetrieb möglich ist. Hierzu kann beispielsweise vorgesehen werden, dass das Fahrzeug mindestens einen Rückspiegel aufweist, der am unteren Karosseriekörper angeordnet ist, so dass eine Bewegung des oberen Karosseriekörper bei unveränderter Fahrerposition die Verwendung der Rückspiegel nicht beeinträchtigt.

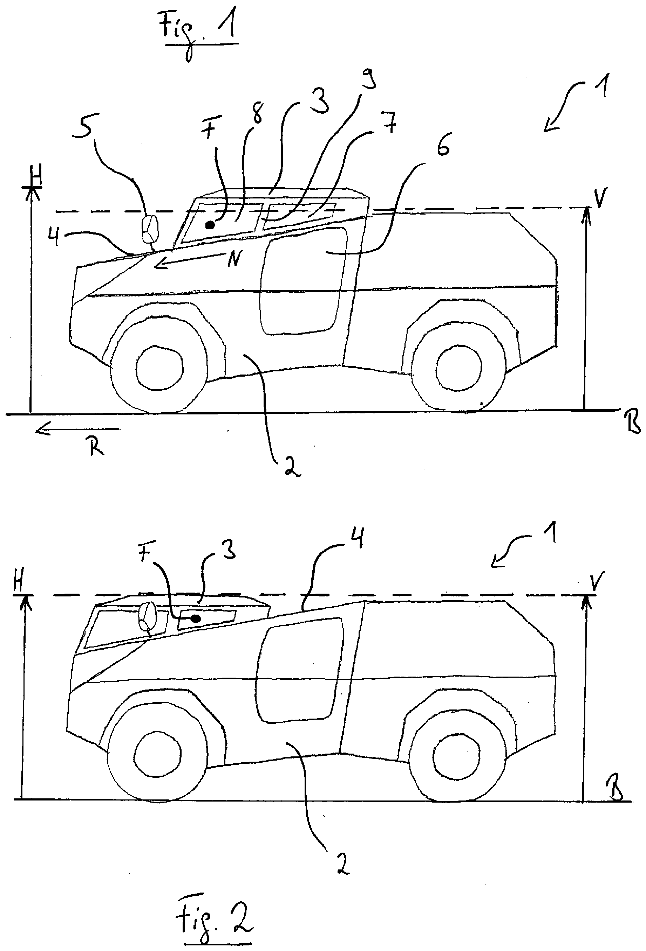

Ein bevorzugtes Ausführungsbeispiel wird anhand der Fig. 1 und 2 beschrieben. Es zeigen:
- Fig. 1: ein militärisches Kraftfahrzeug in der Marschposition in einer Seitenansicht, und
- Fig. 2: das Fahrzeug aus Fig. 1 in der Transportposition.

Die Fig. 1 und 2 zeigen ein hochgepanzertes militärisches Fahrzeug 1, welches einen unteren Karosseriekörper 2 aufweist, der mit dem Fahrgestell verbunden ist. In dem unteren Karosseriekörper 2 ist ein Fahrerraum für die Besatzung mit Sitzen angeordnet, der über eine Seitentüre 6 erreichbar ist.

Auf dem unteren Karosseriekörper 2 ist ein oberer Karosseriekörper 3, der als Dachhaube ausgestaltet ist, verschiebbar angeordnet. Der keilförmige vordere Abschnitt des unteren Karosseriekörpers 2 beinhaltet eine Schrägfläche 4, die gegenüber einer Horizontalen B geneigt ist. Der Neigungswinkel zwischen der Schrägfläche 4 und der Horizontalen B beträgt weniger als 20° , nämlich etwa 15°. Der obere Karosseriekörper 3 ist in Neigungsrichtung N der Schrägfläche 4 über nicht näher dargestellte Führungselemente zur Verringerung der Fahrzeughöhe H translatorisch verschiebbar.

Die Verschiebebewegung erfolgt linear und einachsig entlang einer Achse parallel zur Neigungsrichtung N.

Das Fahrzeug weist eine Gesamtfahrzeughöhe H auf, die oberhalb eines vorgegebenen Bahnverlademaßes V liegt. Somit kann das Fahrzeug 1 in der in Fig. 1 gezeigten Marschposition nicht verladen werden.

Die Fig. 2 zeigt das gepanzerte Fahrzeug 1 nach Beendigung der Verschiebebewegung des oberen Karosseriekörpers 3 in Neigungsrichtung. Durch die Verschiebung des oberen Karosseriekörpers 3 wird die Fahrzeughöhe H des Fahrzeugs 1 verringert, so dass sie nunmehr kleiner oder gleich der Verladehöhe V ist. Das Fahrzeug 1 befindet sich somit gemäß Fig. 2 in der Transportposition und kann beispielsweise bahnverladen werden.

In der Transportposition und der Marschposition ist die Dachhaube 3 über eine Zurrvorrichtung mit dem unteren Karosseriekörper 2 verzurrt, so dass eine unbeabsichtigte Verschiebung ausgeschlossen wird. Nach dem Entriegeln der Zurrvorrichtung kann die verschiebbare Dachhaube beispielsweise mit Hilfe eines Ratschenspanngurtes oder eines Kurbelantriebes manuell in die andere Position bewegt werden. Die Bewegung des oberen Karosseriekörpers 3 in die Transportposition erfolgt somit durch Ausnutzung der Schwerkraft. Nach der Verladung kann die Besatzung eigenständig die ursprüngliche Marschposition schnell und sicher wieder herstellen. Hierfür können auch elektrische, hydraulische oder pneumatische Antriebe, die beispielsweise Ketten, Spindeln, Hubkolben oder Direktantriebe umfassen, vorgesehen werden.

Durch eine geeignete, nicht weiter dargestellte Abdichtung in der Marschposition wird eine ABC-Sicherheit und Wartfähigkeit erreicht.

Die Einbringung der nicht näher dargestellten, geneigten Führungseinrichtung wird bereits durch den keilförmigen Abschnitt des unteren Karosseriekörpers 2 ermöglicht. Als Führungsvorrichtungen können Linearschienen, Rollenschlitten, Gleitschienen oder Rollen vorgesehen werden.

Der obere Karosseriekörper 3 ist als Tragstruktur 9 ausgestaltet, die nach allen Seiten hin Fensterscheiben 7, 8 trägt. Die Tragstruktur 9 ist ferner derart tragfähig ausgestaltet, dass eine nicht dargestellte Waffe mit einer Lafette auf der Tragstruktur 9 anordbar ist.

Der obere Karosseriekörper 3 bildet den oberen Abschluss eines Fahrerraumes, wobei der Fahrer auf einem Sitz innerhalb des unteren Karosseriekörpers 2 sitzt und der Kopf F des Fahrers sich im oberen Karosseriekörper 3 befindet.

Auch nach Verschiebung der Haube 3 in die Transportposition gemäß Fig. 2 ist ein Notrangierbetrieb des Fahrzeugs 1 bei verminderter Kopffreiheit möglich, da die Dachhaube 3 auch in der Transportposition noch eine Rundumsicht der Fahrerkopfposition F bietet. Der Rückspiegel 5 ist zudem an dem unteren Karosseriekörper 2 angeordnet und wird somit nicht mit dem oberen Karosseriekörper 3 mitbewegt.

In nicht dargestellter Weise kann der obere Karosseriekörper 3 auch den oberen Abschluss eines Frachtraumes darstellen, wobei dieser dann insbesondere entgegen der Fahrzeugfahrtrichtung R nach hinten hin in Heckrichtung zur Verringerung der Fahrzeughöhe H verschiebbar ist, wobei der untere Karosseriekörper dann eine entsprechende Schrägfläche nach hinten hin aufweist. Ferner ist auch möglich, dass mehrere obere Karosseriekörper vorgesehen werden, die beispielsweise nach vorne und nach hinten verschiebbar auf dem unteren Karosseriekörper angeordnet sind. Ferner ist auch eine Ausgestaltung vorstellbar, bei der die Dachhaube teilbar ist, wobei ein Teil nach vorne und ein Teil nach hinten verschoben wird.

### Bezugszeichen:

- 1: Fahrzeug
- 2: unterer Karosseriekörper
- 3: oberer Karosseriekörper
- 4: Schrägfläche
- 5: Rückspiegel
- 6: Fahrzeugtür
- 7: Fensterscheibe
- 8: Fensterscheibe
- 9: Tragstruktur

- B: Boden/Horizontale
- F: Fahrerkopfposition
- N: Neigungsrichtung
- H: Fahrzeughöhe
- R: Fahrzeugfahrtrichtung
- V: Verlademaß

## Patentansprüche

1. Fahrzeug, insbesondere militärisches Fahrzeug, mit einer einen oberen Karosseriekörper (3) und einen unteren Karosseriekörper (2) umfassenden Fahrzeugkarosserie, wobei der obere Karosseriekörper (3) gegenüber dem unteren Karosseriekörper (2) zur Verringerung der Fahrzeughöhe (H) bewegbar ist, wobei der obere Karosseriekörper (3) in Neigungsrichtung (N) einer gegenüber der Horizontalen (B) geneigten Schrägfläche (4) verschiebbar auf dem unteren Karosseriekörper (2) angeordnet ist,
**dadurch gekennzeichnet,**
**dass** der obere Karosseriekörper (3) als Haube ausgestaltet ist und mit dem unteren Karosseriekörper (2) einen Fahrzeuginnenraum bildet und dass der obere Karosseriekörpers (3) aus einer Marschposition in eine Transportposition bewegbar ist, in der die Fahrzeughöhe (H) verringert ist.

2. Fahrzeug nach Anspruch 1, **dadurch gekennzeichnet, dass** der obere Karosseriekörper (3) in Fahrzeugfahrtrichtung (R) verschiebbar ist.

3. Fahrzeug nach Anspruch 1 oder 2, **dadurch gekennzeichnet, dass** in der Marschposition der obere Karosseriekörper (3) den oberen Abschluss eines Fahrerraumes bildet.

4. Fahrzeug nach einem der vorhergehenden Ansprüche, **dadurch gekennzeichnet, dass** es eine Dichtungsvorrichtung aufweist, die in der Marschposition den Fahrerraum gegenüber der Außenumgebung abdichtet.

5. Fahrzeug nach einem der vorhergehenden Ansprüche, **dadurch gekennzeichnet, dass** in der Marschposition der obere Karosseriekörper (3) den oberen Abschluss eines Frachtraumes bildet, wobei der der obere Karosseriekörper (3) insbesondere entgegen der Fahrzeugfahrtrichtung (R) verschiebbar ist.

6. Fahrzeug nach einem der vorhergehenden Ansprüche, **dadurch gekennzeichnet, dass** der obere Karosseriekörper (3) in der Marschposition und der Transportposition mittels mindestens einer Zurrvorrichtung zurrbar ist.

7. Fahrzeug nach einem der vorhergehenden Ansprüche, **dadurch gekennzeichnet, dass** die Marschposition und die Transportposition durch eine definierte Endlage festgelegt sind.

8. Fahrzeug nach einem der vorhergehenden Ansprüche, **dadurch gekennzeichnet, dass** es eine Führungsvorrichtung für die Bewegung des oberen Karosseriekörpers (3) aufweist.

9. Fahrzeug nach einem der vorhergehenden Ansprüche, **dadurch gekennzeichnet, dass** die Bewegung des oberen Karosseriekörpers (3) manuell und/oder mit einem elektrischen, hydraulischen oder pneumatischen Antrieb durchführbar ist.

10. Fahrzeug nach einem der vorhergehenden Ansprüche, **dadurch gekennzeichnet, dass** der obere Karosseriekörper (3) gepanzert ist.

11. Fahrzeug nach einem der vorhergehenden Ansprüche, **dadurch gekennzeichnet, dass** der obere Karosseriekörper (3) eine Tragstruktur (9) beinhaltet, die insbesondere mindestens ein Fenster (7, 8), eine Waffe, eine sensorische Einrichtung und/oder eine optische Einrichtung trägt.

12. Fahrzeug nach einem der vorhergehenden Ansprüche, **dadurch gekennzeichnet, dass** es mindestens einen Rückspiegel (5) aufweist, der am unteren Karosseriekörper (2) angeordnet ist.

13. Fahrzeug nach einem der vorhergehenden Ansprüche, **dadurch gekennzeichnet, dass** der untere Karosseriekörper (2) einen keilförmigen Abschnitt aufweist, der die Schrägfläche (4) umfasst.

## Claims

1. Vehicle, in particular military vehicle, having a vehicle body which comprises an upper body element (3) and a lower body element (2), the upper body element (3) being movable with respect to the lower body element (2) in order to reduce the vehicle height (H), the upper body element (3) being arranged on the lower body element (2) such that it can be displaced in the inclination direction (N) of an oblique surface (4) which is inclined with respect to the horizontal (B), **characterized in that** the upper body element (3) is configured as a hood and, together with the lower body element (2), forms a vehicle interior, and **in that** the upper body element (3) can be moved out of a march position into a transport position, in which the vehicle height (H) is reduced.

2. Vehicle according to Claim 1, **characterized in that** the upper body element (3) can be displaced in the vehicle driving direction (R).

3. Vehicle according to Claim 1 or 2, **characterized in that** the upper body element (3) forms the upper termination of a driver compartment in the march position.

4. Vehicle according to one of the preceding claims, **characterized in that** it has a seal apparatus which, in the march position, seals the driver's compartment with respect to the external surroundings.

5. Vehicle according to one of the preceding claims, **characterized in that**, in the march position, the upper body element (3) forms the upper termination of a cargo compartment, it being possible for the upper body element (3) to be displaced, in particular, counter to the vehicle driving direction (R).

6. Vehicle according to one of the preceding claims, **characterized in that** the upper body element (3) can be lashed by means of at least one lashing apparatus in the march position and the transport position.

7. Vehicle according to one of the preceding claims, **characterized in that** the march position and the transport position are fixed by way of a defined end position.

8. Vehicle according to one of the preceding claims, **characterized in that** it has a guide apparatus for the movement of the upper body element (3).

9. Vehicle according to one of the preceding claims, **characterized in that** the movement of the upper body element (3) can be carried out manually and/or by way of an electric, hydraulic or pneumatic drive.

10. Vehicle according to one of the preceding claims, **characterized in that** the upper body element (3) is armoured.

11. Vehicle according to one of the preceding claims, **characterized in that** the upper body element (3) comprises a support structure (9) which supports, in particular, at least one window (7, 8), a weapon, a sensor device and/or an optical device.

12. Vehicle according to one of the preceding claims, **characterized in that** it has at least one rear view mirror (5) which is arranged on the lower body element (2).

13. Vehicle according to one of the preceding claims, **characterized in that** the lower body element (2) has a wedge-shaped section which comprises the oblique surface (4).

## Revendications

1. Véhicule, en particulier véhicule militaire, avec une carrosserie de véhicule comprenant un corps de carrosserie supérieur (3) et un corps de carrosserie inférieur (2), dans lequel le corps de carrosserie supérieur (3) est mobile par rapport au corps de carrosserie inférieur (2) pour la réduction de la hauteur de véhicule (H), dans lequel le corps de carrosserie supérieur (3) est agencé de manière mobile dans le sens d'inclinaison (N) d'une surface oblique (4) inclinée par rapport à l'horizontale (B) sur le corps de carrosserie inférieur (2),
**caractérisé en ce que**
le corps de carrosserie supérieur (3) est configuré comme un capot et forme, avec le corps de carrosserie inférieur (2), un espace intérieur de véhicule et **en ce que** le corps de carrosserie supérieur (3) est mobile d'une position de marche à une position de transport, dans laquelle la hauteur de véhicule (H) est réduite.

2. Véhicule selon la revendication 1, **caractérisé en ce que** le corps de carrosserie supérieur (3) est mobile dans le sens de déplacement de véhicule (R).

3. Véhicule selon la revendication 1 ou 2, **caractérisé en ce que** dans la position de marche, le corps de carrosserie supérieur (3) forme la terminaison supérieure d'un espace conducteur.

4. Véhicule selon l'une quelconque des revendications précédentes, **caractérisé en ce qu'**il présente un dispositif d'étanchéité qui rend étanche dans la position de marche l'espace conducteur par rapport à l'environnement extérieur.

5. Véhicule selon l'une quelconque des revendications précédentes, **caractérisé en ce que** dans la position de marche, le corps de carrosserie supérieur (3) forme la terminaison supérieure d'un espace de soute, dans lequel le corps de carrosserie supérieur (3) est mobile en particulier dans le sens inverse au sens de déplacement du véhicule (R).

6. Véhicule selon l'une quelconque des revendications précédentes, **caractérisé en ce que** le corps de carrosserie supérieur (3) peut être arrimé dans la position de marche et la position de transport à l'aide d'au moins un dispositif d'arrimage.

7. Véhicule selon l'une quelconque des revendications précédentes, **caractérisé en ce que** la position de marche et la position de transport sont fixées par une position d'extrémité définie.

8. Véhicule selon l'une quelconque des revendications précédentes, **caractérisé en ce qu'**il présente un dispositif de guidage pour le mouvement du corps de carrosserie supérieur (3).

9. Véhicule selon l'une quelconque des revendications précédentes, **caractérisé en ce que** le mouvement du corps de carrosserie supérieur (3) peut être réalisé manuellement et/ou avec un entraînement électrique, hydraulique ou pneumatique.

10. Véhicule selon l'une quelconque des revendications précédentes, **caractérisé en ce que** le corps de carrosserie supérieur (3) est blindé.

11. Véhicule selon l'une quelconque des revendications précédentes, **caractérisé en ce que** le corps de carrosserie supérieur (3) contient une structure porteuse (9) qui porte en particulier au moins une fenêtre (7, 8), une arme, un dispositif de détection et/ou un dispositif optique.

12. Véhicule selon l'une quelconque des revendications précédentes, **caractérisé en ce qu'**il présente au moins un rétroviseur arrière (5) qui est agencé au niveau du corps de carrosserie inférieur (2).

13. Véhicule selon l'une quelconque des revendications précédentes, **caractérisé en ce que** le corps de carrosserie inférieur (2) présente une section en forme de coin qui comprend la surface oblique (4).
